# EUROPÄISCHE PATENTSCHRIFT

(11) **EP 2 766 244 B1**
(45) Veröffentlichungstag und Bekanntmachung des Hinweises auf die Patenterteilung: **22.06.2016**
(21) Anmeldenummer: 12769356.2
(22) Anmeldetag: 21.09.2012
(51) Int. Cl.: B62D 15/02, B60Q 9/00

(54) **VERFAHREN ZUR UNTERSTÜTZUNG EINES FAHRERS EINES FAHRZEUGS BEI EINEM AUSPARKVORGANG AUS EINER QUERPARKLÜCKE**
METHOD FOR ASSISTING A DRIVER OF A VEHICLE IN LEAVING A PERPENDICULAR/DIAGONAL PARKING SPACE
PROCÉDÉ D'ASSISTANCE À UN CONDUCTEUR DE VÉHICULE LORS D'UNE MAN UVRE DE SORTIE DEPUIS UNE PLACE DE STATIONNEMENT EN ÉPI

(30) Priorität: 14.10.2011 DE 102011084549
(43) Veröffentlichungstag der Anmeldung: 20.08.2014
(73) Patentinhaber: Robert Bosch GmbH, 70442 Stuttgart (DE)
(72) Erfinder: WULF, Felix, 71638 Ludwigsburg (DE)
(86) Internationale Anmeldenummer: PCT/EP2012/068704
(87) Internationale Veröffentlichungsnummer: WO 2013/053585

(56) Entgegenhaltungen:
- WO-A1-2005/051709
- DE-A1-102009 046 163
- DE-A1-102009 060 165

## Beschreibung

Die vorliegende Erfindung betrifft ein Verfahren zur Unterstützung eines Fahrers eines Fahrzeugs bei einem Ausparkvorgang aus einer Querparklücke sowie eine Ausparkvorrichtung für ein Fahrzeug für die Durchführung eines Ausparkvorgangs aus einer Querparklücke.

### Stand der Technik

Verfahren für das Ausparken aus einer Parklücke sind grundsätzlich bekannt. Zum Beispiel geht aus der Druckschrift DE 10 2008 047 284 A1 hervor, dass eine Fahrassistenzvorrichtung einen Fahrer beim Ausparken aus einer Längsparklücke unterstützt. Hierfür verwendet das bekannte System verschiedene Sensoren, um die Umgebung des Fahrzeugs hinsichtlich sich bewegender Objekte zu überwachen. Dabei wird der Fahrer zumindest gewarnt, wenn sich ein Fahrzeug annähert, welches eine Gefährdung für den Ausparkvorgang darstellen könnte.

Aus der Druckschrift DE 10 2009 060 165 A1 geht ein Verfahren und eine Vorrichtung zum Ausparken eines Fahrzeug aus einem Querparkplatz hervor. Mittels Sensoren des Fahrzeugs werden Informationen von Seitenbereich des Fahrzeugs erfasst, die sich entlang der Längsrichtung seitlich neben dem Fahrzeug befinden. Eine Querlenkung des Fahrzeugs wird automatisch in Abhängigkeit der Informationen derart ausgeführt, dass das Fahrzeug ausgeparkt wird ohne mit Objekten in den Seitenbereichen des Fahrzeugs zu kollidieren.

Das Dokument DE 10 2009 060 165 A1 ist als nächstliegender Stand der Technik nach dem Oberbegriff des Anspruchs 1 zu sehen.

Nachteilhaft bei der bekannten Art und Weise eines Unterstützungsverfahrens ist es, dass nur die fahrenden Objekte berücksichtigt werden. Darüber hinaus wird eine Warnung erzeugt und nicht Einfluss auf den Ausparkvorgang selbst genommen. Dies ist bei den Verfahren gemäß dem Stand der Technik auch nicht notwendig, da ein Fahrzeug aus einer Längsparklücke üblicherweise relativ schnell in den fließenden Verkehr einordenbar ist. Dementsprechend sind bekannte Verfahren nur schwer oder überhaupt nicht für andere Parksituationen, insbesondere jedoch nicht für Querparksituationen einsetzbar.

### Offenbarung der Erfindung

Aufgabe der vorliegenden Erfindung ist es, die Nachteile bekannter Verfahren und Vorrichtungen zumindest teilweise zu beheben. Insbesondere ist es Aufgabe der vorliegenden Erfindung ein Verfahren und eine Ausparkvorrichtung zur Verfügung zu stellen, welche in kostengünstiger und einfacher Weise eine Unterstützung des Fahrers bei einem Ausparkvorgang aus einer Querparklücke unterstützen.

Voranstehende Aufgabe wird gelöst durch ein Verfahren mit den Merkmalen des unabhängigen Anspruchs 1 sowie durch eine Ausparkvorrichtung mit den Merkmalen des unabhängigen Anspruchs 9. Weitere vorteilhafte Ausgestaltungsformen ergeben sich aus den Unteransprüchen, den Zeichnungen und der Beschreibung. Dabei können Merkmale, die im Zusammenhang mit einem erfindungsgemäßen Verfahren beschrieben worden sind, selbstverständlich auch mit Bezug auf eine erfindungsgemäße Ausparkvorrichtung angewendet werden, so dass die entsprechenden Merkmale jeweils wechselseitig miteinander kombiniert werden können beziehungsweise kombiniert werden.

Ein erfindungsgemäßes Verfahren dient zur Unterstützung eines Fahrers eines Fahrzeugs bei einem Ausparkvorgang aus einer Querparklücke. Hierfür weist ein erfindungsgemäßes Verfahren die folgenden Schritte auf:
a) Überwachung der Umgebung des Fahrzeugs auf stehende und sich relativ zum Fahrzeug bewegende Objekte,
b) Ermittlung vorhandener Ausparkmöglichkeiten außerhalb der Querparklücke,
c) Erzeugung eines Umfeldmodells auf Basis der Ergebnisse der Schritte a) und b),
d) Erstellen einer Zieltrajektorie für die Ausparkmöglichkeit, und
e) Abfahren der Zieltrajektorie durch Ansteuern von Lenkung und/oder

### Beschleunigung des Fahrzeugs.

Unter einer Querparklücke im Sinne der vorliegenden Erfindung ist eine Parklücke zu verstehen, bei welcher das Fahrzeug nicht parallel zu einer an dem Fahrzeug vorbeilaufenden Fahrspur ausgerichtet ist. Darunter sind also auch Parklücken zu verstehen, welche ein sogenanntes Schrägparken ermöglichen. Insbesondere ist ein erfindungsgemäßes Verfahren vorteilhaft, wenn Parksituationen berücksichtigt werden, bei welchen das Fahrzeug im Wesentlichen rechtwinklig zu einer Fahrspur steht. In all diesen Fällen ist es häufig notwendig, dass das Fahrzeug rückwärts aus der Querparklücke herausstoßen muss, um anschließend in entgegengesetzter Richtung den Weg fortzusetzen. Ein solcher Ausparkvorgang dauert dementsprechend relativ lange, so dass eine Berücksichtigung von Umgebung und sich bewegenden Objekten in der Umgebung deutlich wichtiger ist, als dies bei Längsparklücken der Fall ist.

Ein erfindungsgemäßes Verfahren zeichnet sich unter anderem dadurch aus, dass ein Umfeldmodell erzeugt wird. Dieses Umfeldmodell berücksichtigt nicht nur sich bewegende Objekte, sondern auch relativ zum Fahrzeug stehende Objekte. Damit kann anhand des Umfeldmodells eine umfassende Beurteilung der Umgebung des Fahrzeugs durchgeführt werden, welche wiederum Einfluss auf die Erstellung der Zieltrajektorie hat. Demnach können für die Zieltrajektorie eine Vielzahl von Einflussmöglichkeiten berücksichtigt werden, so dass ein idealer Ausparkvorgang nicht nur hinsichtlich der Zieltrajektorie, sondern auch hinsichtlich der Geschwindigkeit des Abfahrens der Zieltrajektorie sowie des Starts des Ausparkvorgangs selbst erzielt werden kann.

Unter einer Ausparkmöglichkeit ist im Rahmen der vorliegenden Erfindung zum Beispiel eine Fahrspur zu verstehen, die vor oder hinter dem Fahrzeug angeordnet ist. Selbstverständlich kann eine Ausparkmöglichkeit auch ein Freiraum sein, welcher auf einem großen Parkplatz vor oder hinter der Parklücke vorhanden ist.

Unter dem Abfahren der Zieltrajektorie durch Ansteuerung von Lenkung und/oder Beschleunigung des Fahrzeugs sind unterschiedliche Varianten vorstellbar. Insbesondere kann es sich hier um einen semiautomatischen oder automatischen Ansteuerprozess, also ein automatisches oder ein semiautomatisches Ausparkverfahren handeln. Dabei ist unter dem Ansteuern der Beschleunigung des Fahrzeugs sowohl das Bremsen, als auch das Beschleunigen des Fahrzeugs zu verstehen. Bei semiautomatischen Ausparkprozessen kann der nicht automatisch übernommene Ansteuerteil, also zum Beispiel das Lenken oder das Beschleunigen/Bremsen des Fahrzeugs, vom Fahrzeugführer durchgeführt werden.

Es kann von Vorteil sein, wenn bei einem erfindungsgemäßen Verfahren die Schritte a) bis d) während des Abfahrens der Zieltrajektorie kontinuierlich wiederholt werden. Eine kontinuierliche Wiederholung ist im Rahmen der vorliegenden Erfindung insbesondere eine stetige oder aber eine im Wesentlichen stetige Ausführung des Verfahrens. Dabei kann auch eine semikontinuierliche Ausführung zum Beispiel durch das regelmäßige Durchführen in diskreten Zeitabständen eine derartige Ausführung der Erfindung darstellen. Diese kontinuierliche Durchführung des Verfahrens führt dazu, dass auch das Umfeldmodell ständig aktualisiert wird. Das bedeutet, dass auch die Zieltrajektorie während der Durchführung des Ausparkvorgangs sich einer Veränderung im Umfeldmodell anpassen kann. Da jedoch sich bewegende Objekte bereits relativ zum Fahrzeug im ersten Überwachungsschritt des erfindungsgemäßen Verfahrens festgestellt werden, kann durch entsprechende Auswertung der Informationen eine Vorhersage getroffen werden wann die sich bewegenden Objekte an welchem Ort zu finden sein müssen. Dementsprechend kann durch die Erzeugung eines solchen Umfeldmodells eine Vorhersage getroffen werden, anhand der eine ideale Durchführung des Ausparkvorgangs selbst möglich wird.

Es kann ebenfalls von Vorteil sein, wenn bei einem erfindungsgemäßen Verfahren bei der Überwachung der Umgebung des Fahrzeugs bei der Erkennung von bewegten Objekten die Relativgeschwindigkeit zum Fahrzeug ermittelt und im Umfeldmodell berücksichtigt wird. Damit wird es möglich, dass die sich bewegenden Objekte im Bezug zum Fahrzeug vorhersagbar hinsichtlich ihrer Bewegung werden. Dadurch wird eine Einschätzung möglich, ob ein Ausparken zum momentanen Zeitpunkt bereits möglich ist, oder ob noch abgewartet werden muss. Dementsprechend ist es auch möglich, dass bereits bei begonnenem Ausparkvorgang die Parktrajektorie abgeändert wird. Beispielsweise kann ein Wiederhineinfahren in die Querparklücke erforderlich sein. Damit wird ein erfindungsgemäßes Verfahren noch weiter verbessert, da die Sicherheit sowohl für den sich umgebenden Verkehr, als auch das Fahrzeug selbst erhöht wird.

Ebenfalls von Vorteil kann es sein, wenn bei einem erfindungsgemäßen Verfahren für die Überwachung der Umgebung des Fahrzeugs auf stehende Objekte ein erstes Sensorsystem und auf sich relativ zum Fahrzeug bewegende Objekte ein zweites Sensorsystem eingesetzt wird. Dabei können die einzelnen Sensorsysteme einzelne Sensoren aufweisen, die insbesondere auf die entsprechende Aufgabe der Überwachung besonders ausgewählt sind. So kann für die stehenden Objekte vorzugsweise ein Sensorsystem für die Nahdistanz und für die sich relativ zum Fahrzeug bewegenden Objekte ein Sensorsystem für die Ferndistanz vorgesehen sein. Unter Ferndistanz sind dabei insbesondere Bereiche von bis zu 50 oder mehr Metern zu verstehen. Die Nahdistanzen sind insbesondere Überwachungsdistanzen bis ca. 5m um das Fahrzeug herum. Die Sensorsysteme können zum Beispiel Radarsensoren, Videosensoren, Lidarsensoren oder Ultraschallsensoren sein. Vorzugsweise wird die Geschwindigkeit der erfassten sich bewegenden Objekte genau gemessen, so dass wie voranstehend erläutert eine Weiterberechnung der Bewegung der Objekte, also eine Prädiktion der Aufenthaltsorte der Objekte, möglich ist.

Bei dem erfindungsgemäßen Verfahren wird für den Schritt der Überwachung der Umgebung des Fahrzeugs unter anderem eine Kommunikation mit sich relativ zum Fahrzeug bewegenden Objekten, insbesondere weiteren Fahrzeugen, durchgeführt. Sich bewegende Objekte sind bei einem erfindungsgemäßen Verfahren häufig andere Fahrzeuge. Dies können Kraftfahrzeuge, aber auch nicht motorbetriebene Fahrzeuge, wie zum Beispiel Fahrräder sein. Werden andere Kraftfahrzeuge als sich bewegende Objekte erkannt, so erfolgt vorzugsweise nach dieser Ausführungsform eine Kommunikation mit diesen Fahrzeugen. Dabei können vorzugsweise Positions- und/oder Richtungsdaten und/oder Abmessungen und/oder Geschwindigkeiten ausgetauscht werden. Damit wird es möglich, dass dem fließenden Verkehr hinter einer Querparklücke Informationen übergeben werden, die den Ausparkvorgang des Fahrzeugs selbst betreffen. Damit kann zum Beispiel der angesprochene fließende Verkehr die eigene Fahrt verlangsamen, um dem Fahrzeug das Ausparken zu ermöglichen. Auch eine Beschleunigung des Verkehrs ist möglich, um eine größere Lücke zu schaffen, so dass das Fahrzeug in gewünschter Weise Ausparken kann. Diese Kommunikation kann bidirektional oder einseitig erfolgen. Vorzugsweise erfolgt jedoch eine bidirektionale Kommunikation, so dass sich bewegende Objekte, insbesondere weitere Fahrzeuge, mit dem vorliegenden Fahrzeug kommunizieren und diesem sozusagen antworten können.

Ein weiterer Vorteil ist es, wenn bei einem erfindungsgemäßen Verfahren vor und/oder während des Ausparkvorgangs aus der Querparklücke ein Ausparksignal vom Fahrzeug ausgegeben wird. Dieses reicht in eindirektionaler Weise aus, kann jedoch auch in bidirektionaler Weise erfolgen. Dieses Ausparksignal ist von anderen Fahrzeugen empfangbar und kann zum Beispiel als Radiosignal ausgesendet werden. Gelangt ein weiteres Fahrzeug, also ein sich bewegendes Objekt, in den Sendebereich des ausparkenden Fahrzeugs, so wird es das Ausparksignal empfangen und kann dieses entsprechend verarbeiten. Insbesondere kann zum Beispiel über eine eingeschaltete Radioanlage eine Warnung für das herannahende Fahrzeug ausgegeben werden. Auch komplexere Funksignale, die zum Beispiel im WLAN-Bereich, im GSM-Bereich, im UMTS-Bereich oder in ähnlichen Funksystemen senden, sind im Rahmen der vorliegenden Erfindung denkbar. Die anderen Fahrzeuge können dabei dieses Signal direkt ausgeben, oder aber über eine Auswertevorrichtung interpretiert an den Fahrer weiterleiten.

Ein weiterer Vorteil ist es, wenn bei einem erfindungsgemäßen Verfahren das Ausparksignal Informationen zur Position des Fahrzeugs und/oder zur erstellten Zieltrajektorie aufweist. Auch dies ist vorzugsweise eindirektional, so dass diese Informationen nur zur Verfügung gestellt werden, und insbesondere nicht auf einen Empfang von einer Antwort als Signal der weiteren Fahrzeuge gewartet wird. Damit kann eine Meldung an die weiteren Fahrzeuge gegeben werden, um weitere Details hinsichtlich des Ausparkvorgangs zu übermitteln. Dadurch ist es den anderen Fahrzeugen, also den sich relativ zum Fahrzeug bewegenden Objekten, möglich, sich auf die Einzelheiten zum Ausparkvorgang des Fahrzeugs einzustellen.

Ebenfalls vorteilhaft kann es sein, wenn bei einem erfindungsgemäßen Verfahren vor und/oder während des Ausparkvorgangs aus der Querparklücke für die Überwachung der Umgebung des Fahrzeugs Signale von sich relativ zum Fahrzeug bewegenden Objekten, insbesondere weiteren Fahrzeugen, empfangen werden. Hier handelt es sich also um eine Kommunikation die zumindest eindirektional von weiteren Fahrzeugen zum ausparkenden Fahrzeug hin gelangt. Auch hier ist selbstverständlich auch eine bidirektionale Kommunikation denkbar. Dabei ist ein erfindungsgemäßes Verfahren auf einen Empfang dieser Signale eingerichtet. So können die Sensoren für die Überwachung der Umgebung noch kostengünstiger ausgestaltet sein, da über den Empfang der Signale eine Vielzahl von Informationen erhalten werden, die sonst nur aufwendig durch Sensorsysteme und eine entsprechende Auswertung erzielbar wären. Solche Signale können zum Beispiel die Position und/oder die Geschwindigkeit und/oder die Abmessungen betreffen. Bei einer bidirektionalen Kommunikation werden diese Informationen sozusagen von dem ausparkenden Fahrzeug abgefragt bzw. angefragt. Damit werden die Kosten und der Aufwand für die Durchführung eines erfindungsgemäßen Verfahrens noch weiter reduziert.

Ein weiterer Gegenstand der vorliegenden Erfindung ist eine Ausparkvorrichtung für ein Fahrzeug für die Durchführung eines Ausparkvorgangs aus einer Querparklücke. Eine solche Ausparkvorrichtung weist zumindest ein Sensorsystem für die Überwachung der Umgebung eines Fahrzeugs auf stehende und sich relativ zum Fahrzeug bewegende Objekte auf. Darüber hinaus dient das Sensorsystem für die Ermittlung vorhandener Ausparkmöglichkeiten außerhalb der Querparklücke. Weiter weist eine erfindungsgemäße Ausparkvorrichtung eine Auswertvorrichtung für die Erzeugung eines Umfeldmodells auf Basis der vom Sensorsystem zur Verfügung gestellten Ergebnisse und für die Erstellung einer Zieltrajektorie für den Ausparkvorgang auf. Darüber hinaus ist eine Steuervorrichtung für die Steuerung der Lenkung und/oder der Beschleunigung des Fahrzeugs für das Abfahren der Zieltrajektorie vorgesehen. Eine erfindungsgemäße Ausparkvorrichtung ist vorzugsweise ausgebildet, um ein erfindungsgemäßes Verfahren auszuführen. Dementsprechend bringt eine erfindungsgemäße Ausparkvorrichtung die gleichen Vorteile mit sich, wie sie ausführlich mit Bezug auf ein erfindungsgemäßes Verfahren erläutert worden sind.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Figur 1: in Draufsicht eine Möglichkeit einer Ausparksituation aus einer Querparklücke,
- Figur 2: eine weitere Möglichkeit einer Ausparksituation aus einer Querparklücke,

- Figur 3: eine Ausführungsform eines Fahrzeugs mit einer Ausparkvorrichtung.

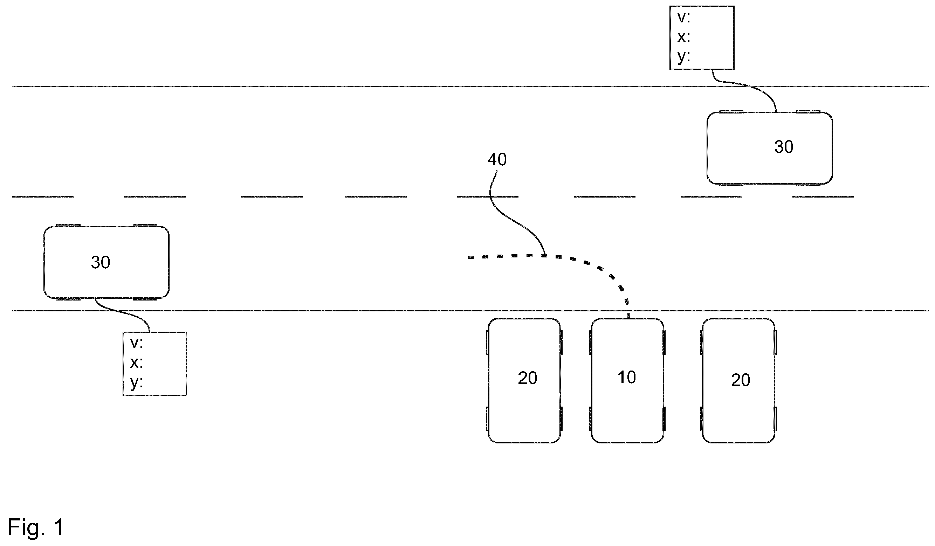

In Figur 1 ist eine erste Situation dargestellt, bei welcher ein Fahrzeug 10 aus einer Querparklücke ausparken möchte. Mit einer gestrichelten Linie 40 ist eine mögliche Zieltrajektorie 40 dargestellt, anhand derer das Fahrzeug 10 aus dieser Querparklücke rückwärts herausstoßen kann, um anschließend in entgegengesetzter Richtung auf der Fahrbahn den Weg aufzunehmen.

Ein erfindungsgemäßes Verfahren überwacht die Umgebung des Fahrzeugs 10, wie sie zum Beispiel in Figur 1 dargestellt ist. Dabei werden stehende Objekte 20 und sich bewegende Objekte 30 erkannt. Bei den Objekten 20 und 30 dieser Ausführungsform handelt es sich um weitere Fahrzeuge. Zum einen sind sich bewegende Objekte 30 auf zwei Fahrspuren unterwegs, zum anderen sind zwei Fahrzeuge benachbart zum Fahrzeug 10 als stehende Objekte 20 erkannt worden. Um das erfindungsgemäße Verfahren durchzuführen, wird die Umgebung des Fahrzeugs 10 überwacht. Dabei wird ein Umfeldmodell erzeugt, welches zum Beispiel ähnlich der Darstellung der Figur 1 aussehen kann. Dabei werden insbesondere weitere Daten zu den sich bewegenden Objekten 30 erfasst. Diese weiteren Daten sind insbesondere die aktuelle Position relativ zum Fahrzeug 10, die zum Beispiel in X- und Y-Koordinaten angegeben werden kann. Darüber hinaus ist es vorteilhaft, wenn die Geschwindigkeit (v) relativ zum Fahrzeug 10 für jedes der sich bewegende Objekte 30 festgehalten wird. Auch das Festhalten weiterer Informationen, wie zum Beispiel der Abmessung oder Position eines Objektes 30 ist dabei denkbar. Auf Basis dieses Umfeldmodells kann die Zieltrajektorie 40 berechnet werden, da insbesondere auch die Geschwindigkeit des Abfahrens beziehungsweise der Startpunkt des Ausparkvorgangs selbst genau festgelegt werden kann. Eine Kollision mit den sich bewegenden Objekten 30 wird dabei zielsicher vermieden.

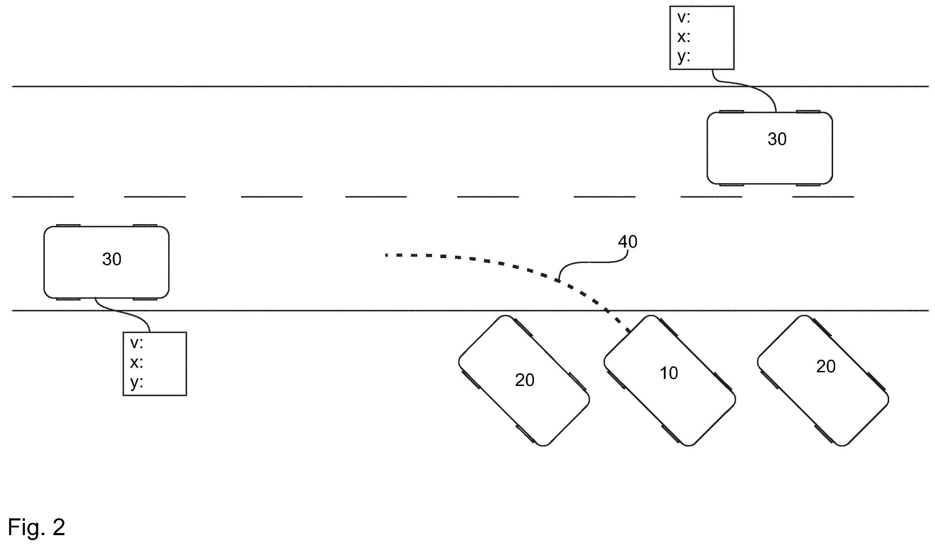

In der Figur 2 ist eine alternative Ausparksituation dargestellt. Das Fahrzeug 10 befindet sich auch hier in einer Querparklücke. Diese Querparklücke ist jedoch eine schräge Querparklücke, so dass die winklige Einstellung der Parklücke zu der dahinterliegenden Ausparkmöglichkeit nicht 90°sondern einen spitzen Winkel umfasst. Ansonsten kann ein erfindungsgemäßes Verfahren auch bei dieser Parksituation in identischer Weise durchgeführt werden. Auch hier muss das Fahrzeug 10 einen Rückwärtszug einlegen, um nach Durchfahren der Zieltrajektorie 40 anschließend in entgegengesetzter Richtung eine Fortbewegung des Fahrzeugs 10 zu ermöglichen.

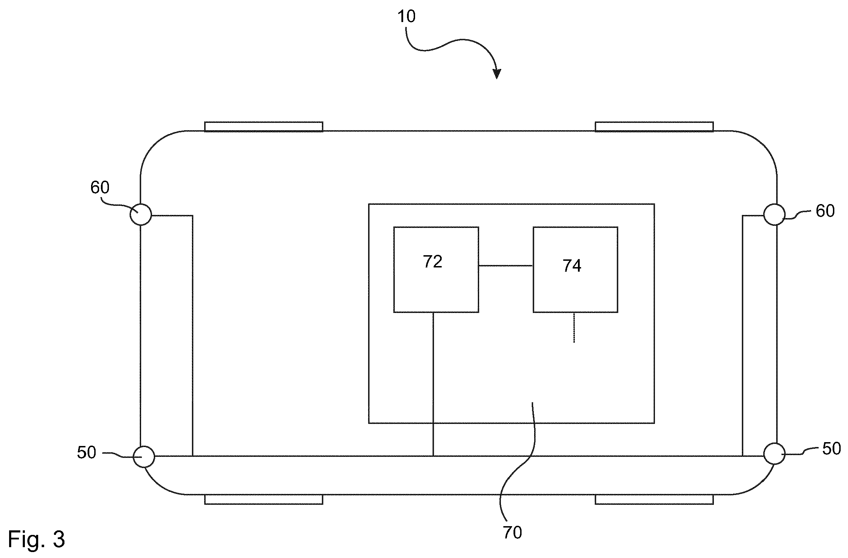

In Figur 3 ist eine Ausführungsform einer erfindungsgemäßen Ausparkvorrichtung 70 dargestellt. Diese ist in einem Fahrzeug 10 im Inneren angeordnet. Sie weist ein erstes Sensorsystem 50 und zweites Sensorsystem 60 auf, die an den Umfängen des Fahrzeugs 10 angeordnet sind, um die Umgebung des Fahrzeugs 10 zu überwachen. Die beiden Sensorsysteme 50 und 60 unterscheiden sich dadurch, dass sie unterschiedliche Reichweiten aufweisen. Insbesondere ist das erste Sensorsystem 50 für die Nahfelderkennung, und das zweite Sensorsystem 60 für eine Fernerkennung ausgelegt. Dabei können sich die einzelnen Sensorsysteme 50 und 60 auch hinsichtlich ihrer technischen Ausgestaltung unterscheiden. So können zum Beispiel Radarsysteme, Ultraschallsysteme oder Videosysteme eingesetzt werden.

Die Ausparkvorrichtung dieser Ausführungsform weist eine Auswertvorrichtung 72 auf. Diese ist in der Lage die Auswertung der Daten der einzelnen Sensorsysteme vorzunehmen und auf diese Weise ein Umfeldmodell für das Fahrzeug 10 zu erstellen. Darüber hinaus kann hier eine Zieltrajektorie 40 vorgegeben werden, wie sie zum Beispiel in den Figuren 1 und 2 dargestellt wird. Ebenfalls vorgesehen ist eine Regelvorrichtung 74, die wiederum mit der Auswertvorrichtung datenkommunizierend verbunden ist. Damit kann die Regelvorrichtung 74 dafür verwendet werden, um Eingriff auf die Steuerung und/oder Regelung des Fahrzeugs zu nehmen. Dies sind insbesondere die Beschleunigung und/oder die Lenkung des Fahrzeugs. Dabei wird vorzugsweise eine Zieltrajektorie 40 abgefahren, wie sie von der Auswertvorrichtung 72 ermittelt beziehungsweise vorgegeben worden ist.

Die voranstehenden Erläuterungen der Ausführungsformen beschreiben die vorliegende Erfindung nur im Rahmen von Beispielen. Selbstverständlich können die Merkmale einzelner Ausführungsformen, sofern technisch sinnvoll, frei miteinander kombiniert werden ohne den Rahmen der vorliegenden Erfindung zu verlassen.

## Patentansprüche

1. Verfahren zur Unterstützung eines Fahrers eines Fahrzeugs (10) bei einem Ausparkvorgang aus einer Querparklücke (100), aufweisend die folgenden Schritte:
a) Überwachung der Umgebung des Fahrzeugs (10) auf stehende (20) und sich relativ zum Fahrzeug (10) bewegende Objekte (30),
b) Ermittlung vorhandener Ausparkmöglichkeiten außerhalb der Querparklücke (100),
c) Erzeugung eines Umfeldmodels auf Basis der Ergebnisse der Schritte a) und b),
d) Erstellen einer Zieltrajektorie (40) für die Ausparkmöglichkeit, und
e) Abfahren der Zieltrajektorie (40) durch Ansteuern von Lenkung und/oder Beschleunigung des Fahrzeugs (10),
**dadurch gekennzeichnet, dass** für den Schritt der Überwachung der Umgebung des Fahrzeugs (10) unter anderem eine Kommunikation mit sich relativ zum Fahrzeug (10) bewegenden Objekten (30), insbesondere weiteren Fahrzeugen, durchgeführt wird.

2. Verfahren nach Anspruch 1, **dadurch gekennzeichnet, dass** die Schritte a) bis d) während des Abfahrens der Zieltrajektorie (40) kontinuierlich wiederholt werden.

3. Verfahren nach einem der vorangegangenen Ansprüche, **dadurch gekennzeichnet, dass** bei der Überwachung der Umgebung des Fahrzeugs (10) bei der Erkennung von bewegten Objekten (30) die Relativgeschwindigkeit zum Fahrzeug (10) ermittelt und im Umfeldmodell berücksichtigt wird.

4. Verfahren nach einem der vorangegangenen Ansprüche, **dadurch gekennzeichnet, dass** für die Überwachung der Umgebung des Fahrzeugs auf stehende Objekte (20) ein erstes Sensorsystem (50) und auf sich zum Fahrzeug (10) relativ bewegende Objekte (30) ein zweites Sensorsystem (60) eingesetzt wird.

5. Verfahren nach einem der vorangehenden Ansprüche, **dadurch gekennzeichnet, dass** vor und/oder während des Ausparkvorgang aus der Querparklücke (100) ein Ausparksignal von dem Fahrzeug (10) ausgegeben wird.

6. Verfahren nach Anspruch 5, **dadurch gekennzeichnet, dass** das Ausparksignal Informationen zur Position des Fahrzeugs (10) und/oder zur erstellten Zieltrajektorie (40) aufweist.

7. Verfahren nach einem der vorangegangenen Ansprüche, **dadurch gekennzeichnet, dass** vor und/oder während des Ausparkvorgangs aus der Querparklücke (100) für die Überwachung der Umgebung des Fahrzeugs (10) Signale von sich relativ zum Fahrzeug (10) bewegenden Objekten (30), insbesondere weiteren Fahrzeugen, empfangen werden.

8. Vorrichtung (70) für ein Fahrzeug (10) zur Durchführung eines Ausparkvorgangs aus einer Querparklücke (100), wobei ein Verfahren nach einem der vorhergehenden Ansprüche ausgeführt wird, aufweisend zumindest ein Sensorsystem (50, 60) für die Überwachung der Umgebung des Fahrzeugs (10) auf stehende (20) und sich relativ zum Fahrzeug (10) bewegende Objekte (30) sowie für die Ermittlung vorhandener Ausparkmöglichkeiten außerhalb der Querparklücke (100), weiter aufweisend eine Auswertvorrichtung (72) für die Erzeugung eines Umfeldmodels auf Basis der vom Sensorsystem (50, 60) zur Verfügung gestellten Ergebnisse und für die Erstellung einer Zieltrajektorie (40) für die Ausparkmöglichkeit, und weiter aufweisend eine Regelvorrichtung (74) für die Regelung der Lenkung und/oder der Beschleunigung des Fahrzeugs (10) für das Abfahren der Zieltrajektorie und weiter aufweisend eine Kommunikationseinheit zur Durchführung einer Kommunikation zwischen dem ausparkenden Fahrzeug und sich relativ zum Fahrzeug (10) bewegenden Objekten (30), insbesondere weiteren Fahrzeugen.

## Claims

1. Method for assisting a driver of a vehicle (10) during an operation of leaving a perpendicular parking space (100), having the following steps of:
a) monitoring the area surrounding the vehicle (10) for stationary objects (20) and objects (30) moving relative to the vehicle (10),
b) determining available options for leaving the parking space outside the perpendicular parking space (100),
c) generating an environmental model on the basis of the results of steps a) and b),
d) creating a target trajectory (40) for the option for leaving the parking space, and
e) starting off on the target trajectory (40) by controlling the steering and/or acceleration of the vehicle (10),
**characterized in that** communication with objects (30) moving relative to the vehicle (10), in particular further vehicles, is carried out, inter alia, for the step of monitoring the area surrounding the vehicle (10).

2. Method according to Claim 1, **characterized in that** steps a) to d) are continuously repeated while starting off on the target trajectory (40).

3. Method according to one of the preceding claims, **characterized in that**, if moving objects (30) are detected when monitoring the area surrounding the vehicle (10), the relative speed with respect to the vehicle (10) is determined and is taken into account in the environmental model.

4. Method according to one of the preceding claims, **characterized in that** a first sensor system (50) is used to monitor the area surrounding the vehicle for stationary objects (20) and a second sensor system (60) is used to monitor the area surrounding the vehicle for objects (30) moving relative to the vehicle (10).

5. Method according to one of the preceding claims, **characterized in that** a signal indicating that the parking space is being left is output by the vehicle (10) before and/or during the operation of leaving the perpendicular parking space (100).

6. Method according to Claim 5, **characterized in that** the signal indicating that the parking space is being left has information relating to the position of the vehicle (10) and/or relating to the created target trajectory (40).

7. Method according to one of the preceding claims, **characterized in that** signals are received from objects (30) moving relative to the vehicle (10), in particular further vehicles, before and/or during the operation of leaving the perpendicular parking space (100) for monitoring the area surrounding the vehicle (10).

8. Apparatus (70) for a vehicle (10) for carrying out an operation of leaving a perpendicular parking space (100), a method according to one of the preceding claims being carried out, having at least one sensor system (50, 60) for monitoring the area surrounding the vehicle (10) for stationary objects (20) and for objects (30) moving relative to the vehicle (10) and for determining available options for leaving the parking space outside the perpendicular parking space (100), also having an evaluation apparatus (72) for generating an environmental model based on the results provided by the sensor system (50, 60) and for creating a target trajectory (40) for the option for leaving the parking space, and also having a control apparatus (74) for controlling the steering and/or the acceleration of the vehicle (10) for starting off on the target trajectory, and also having a communication unit for carrying out communication between the vehicle leaving the parking space and objects (30) moving relative to the vehicle (10), in particular further vehicles.

## Revendications

1. Procédé d'assistance d'un conducteur d'un véhicule (10) lors d'une manoeuvre de sortie de stationnement depuis un créneau de stationnement transversal (100), comprenant les étapes suivantes :
a) surveillance de l'environnement du véhicule (10) en vue d'y détecter des objets immobiles (20) et qui se déplacent (30) par rapport au véhicule (10),
b) détermination des possibilités de sortie de stationnement présentes à l'extérieur du créneau de stationnement transversal (100),
c) génération d'un modèle d'environnement sur la base des résultats des étapes a) et b),
d) création d'une trajectoire cible (40) pour la possibilité de sortie de stationnement et
e) sortie par la trajectoire cible (40) en commandant la direction et/ou l'accélération du véhicule (10),
**caractérisé en ce que** pour l'étape de surveillance de l'environnement du véhicule (10), une communication est effectuée avec des objets (30) qui se déplacent par rapport au véhicule (10), notamment des autres véhicules.

2. Procédé selon la revendication 1, **caractérisé en ce que** les étapes a) à d) sont répétées continuellement pendant la sortie par la trajectoire cible (40).

3. Procédé selon l'une des revendications précédentes, **caractérisé en ce que** lors de la surveillance de l'environnement du véhicule (10), en cas de détection d'objets (30) qui se déplacent, la vitesse relative par rapport au véhicule (10) est déterminée et prise en compte dans le modèle d'environnement.

4. Procédé selon l'une des revendications précédentes, **caractérisé en ce qu'**un premier système de capteur (50) est utilisé pour la surveillance de l'environnement du véhicule en vue d'y détecter des objets immobiles (20) et un deuxième système de capteur (60) en vue d'y détecter des objets qui se déplacent (30) par rapport au véhicule (10).

5. Procédé selon l'une des revendications précédentes, **caractérisé en ce qu'**avant et/ou pendant la manoeuvre de sortie de stationnement depuis le créneau de stationnement transversal (100), un signal de sortie de stationnement est délivré par le véhicule (10).

6. Procédé selon la revendication 5, **caractérisé en ce que** le signal de sortie de stationnement présente des informations relatives à la position du véhicule (10) et/ou à la trajectoire cible (40) créée.

7. Procédé selon l'une des revendications précédentes, **caractérisé en ce qu'**avant et/ou pendant la manoeuvre de sortie de stationnement depuis le créneau de stationnement transversal (100), pour la surveillance de l'environnement du véhicule (10), des signaux sont reçus de la part d'objets (30) qui se déplacent par rapport au véhicule (10), notamment des autres véhicules.

8. Dispositif (70) pour un véhicule (10) destiné à accomplir une manoeuvre de sortie de stationnement depuis un créneau de stationnement transversal (100), un procédé selon l'une des revendications précédentes étant mis en oeuvre, comprenant au moins un système de capteur (50, 60) pour la surveillance de l'environnement du véhicule (10) en vue d'y détecter des objets immobiles (20) et qui se déplacent (30) par rapport au véhicule (10) ainsi que pour la détermination des possibilités de sortie de stationnement présentes à l'extérieur du créneau de stationnement transversal (100), comprenant en outre un dispositif d'interprétation (72) pour la génération d'un modèle d'environnement sur la base des résultats mis à disposition par le système de capteur (50, 60) et pour la création d'une trajectoire cible (40) pour la possibilité de sortie de stationnement, et comprenant en outre un dispositif de régulation (74) pour la régulation de la direction et/ou de l'accélération du véhicule (10) pour la sortie par la trajectoire cible et comprenant en outre une unité de communication destinée à effectuer une communication entre le véhicule sortant de stationnement et des objets (30) qui se déplacent par rapport au véhicule (10), notamment des autres véhicules.
